# EUROPEAN PATENT APPLICATION

(11) **EP 1 187 000 A2**
(43) Date of publication of application: **13.03.2002**
(21) Application number: 01104400.5
(22) Date of filing: 23.02.2001
(51) Int. Cl.: G06F 9/44

(54) **Apparatus and method for handling scene descriptions**

(30) Priority: 29.02.2000 JP 2000055047
(71) Applicant: SONY CORPORATION, Tokyo (JP)
(72) Inventor: Negishi, Shinji, Sony Corporation, Tokyo (JP); Koyanagi, Hideki, Sony Corporation, Tokyo (JP); Yagasaki, Yoichi, Sony Corporation, Tokyo (JP)
(74) Representative: Körber, Martin, Dipl.-Phys.

(57) **Abstract**

A user interface system includes a server which includes a scene description converter for converting an input scene description into scene description data having a hierarchical structure, based on an identifier that indicates a division unit for dividing the input scene description, in accordance with hierarchical information. A scene description delivering unit delivers the scene description having the hierarchical structure to a decoding terminal through a transmission medium/recording medium. A scene description storage device stores the scene description.

## Description

### BACKGROUND OF THE INVENTION

### 1. Field of the Invention

The present invention relates to scene description generating apparatuses and methods using scene description information, scene description converting apparatuses and methods, scene description storing apparatuses and methods, scene description decoding apparatuses and methods, user interface systems, recording media, and transmission media.

### 2. Description of the Related Art

In digital television broadcasting, digital video/versatile discs (DVDs), and home pages on the Internet which are written using the HyperText Markup Language (hereinafter referred to as "HTML"), content is written using scene description methods for containing interaction by user input. Such methods include the Binary Format for Scenes which is a scene description system specified by ISO/IEC14496-1 (hereinafter referred to as "MPEG-4 BIFS"), the Virtual Reality Modeling Language specified by ISO/IEC14772 (hereinafter referred to as "VRML"), and the like. In this description, content data is referred to as a "scene description". A scene description includes audio data, image data, computer graphics data, and the like which are used in the content.

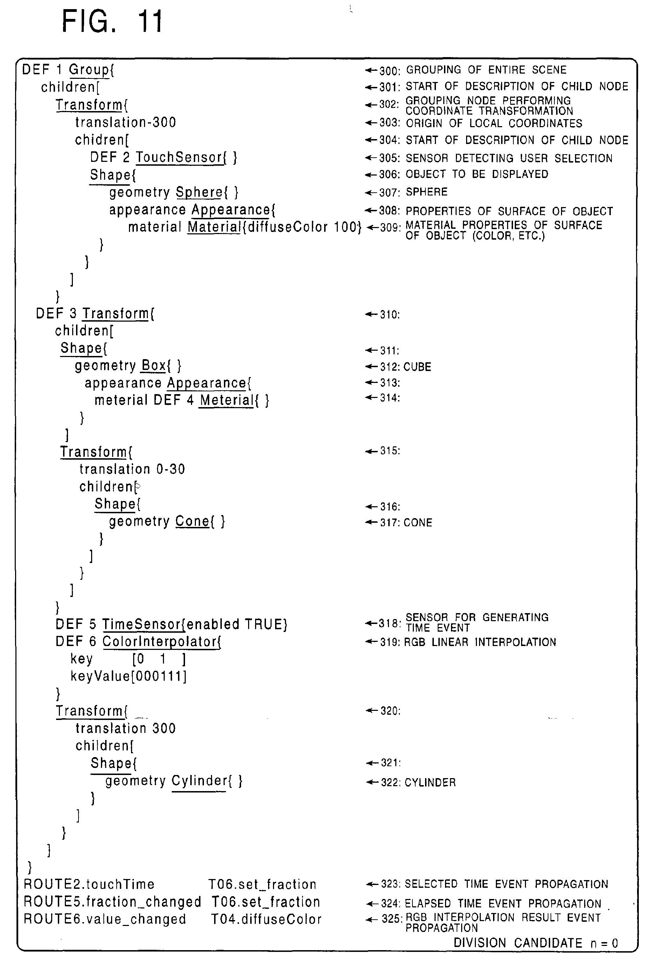

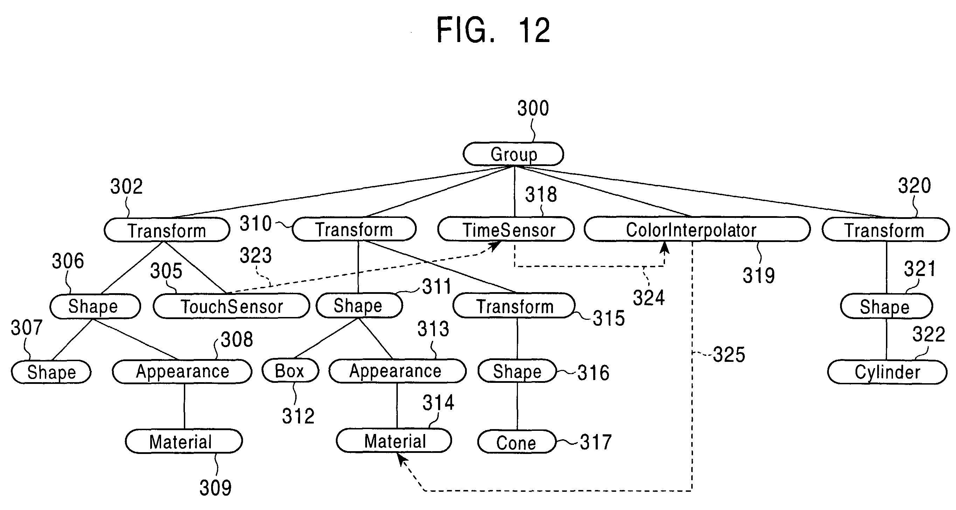

Referring to Figs. 11 to 13, an example of a scene description is described using VRML and MPEG-4 BIFS by way of example. Fig. 11 shows the contents of a scene description. In VRML, scene descriptions are text data, as shown in Fig. 11. Scene descriptions in MPEG-4 BIFS are obtained by binary-coding such text data. Scene descriptions in VRML and MPEG-4 BIFS are represented by basic description units referred to as nodes. In Fig. 11, nodes are underlined. A node is a unit for describing an object to be displayed, a connecting relationship between objects, and the like, and includes data referred to as fields for designating node characteristics and attributes. For example, a Transform node 302 in Fig. 11 is a node capable of designating a three-dimensional coordinate transformation. The Transform node 302 can specify a parallel translation amount of the origin of coordinates in a translation field 303. There are fields capable of referring to other nodes. The structure of a scene description is a tree structure, as shown in Fig. 12. Referring to Fig. 12, an oval indicates a node. Broken lines between nodes represent an event propagation route, and solid lines between nodes represent a parent-child node relationship. A node representing a field of a parent node is referred to as a child node of the parent node. For example, the Transform node 302 shown in Fig. 11 includes a Children field 304 indicating a group of children nodes whose coordinates are to be transformed by the Transform node. In the Children field 304, a TouchSensor node 305 and a Shape node 306 are grouped as children nodes. A node such as one for grouping children nodes in a Children field is referred to as a grouping node. A grouping node is defined in Chapter 4.6.5 of ISO/IEC14772-1 and represents a node having a field including a list of nodes. As described in Chapter 4.6.5 of ISO/IEC14772-1, there are some exceptions in which the field name is not Children. In the following description, such exceptions are also included in Children fields.

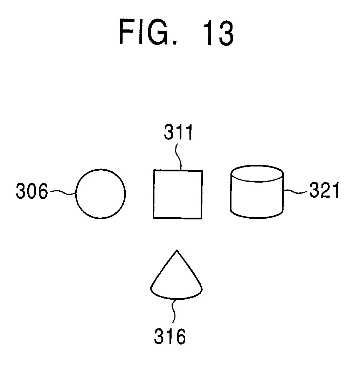

An object to be displayed can be placed in a scene by grouping together a node representing the object and a node representing an attribute and by further grouping together the resultant group of nodes and a node representing a placement position. Referring to Fig. 11, an object represented by a Shape node 306 is translated, which is designated by the Transform node 302, that is, the parent node of the Shape node 306, and the object is thus placed in a scene. The scene description shown in Fig. 11 includes a Sphere node 307 representing a sphere, a Box node 312 representing a cube, a Cone node 317 representing a cone, and a Cylinder node 322 representing a cylinder. The scene description is decoded and is displayed as shown in Fig. 13.

A scene description can include user interaction. Referring to Fig. 11, "ROUTE" indicates an event propagation. A ROUTE 323 indicates that, when a touchTime field in the TouchSensor node 305 to which an identifier 2 is assigned changes, the value, which is referred to as an event, propagates to a startTime field in a TimseSensor node 318 to which an identifier 5 is assigned. In VRML, an arbitrary character string following the keyword "DEF" indicates an identifier. In MPEG-4 BIFS, a numerical value referred to as a node ID is used as an identifier. When a user selects the Shape node 306 grouped in the Children field 304 in the Transform node 302, that is, the parent node of the TouchSensor node 305, the TouchSensor node 305 outputs a selected time as a touchTime event. In the following description, a sensor which is grouped together with an associated Shape node by a grouping node and which is thus operated is referred to as a Sensor node. Sensor nodes in VRML are Pointing-device sensors defined in Chapter 4.6.7.3 of ISO/IEC14772-1, in which the associated Shape node is a Shape node grouped with the parent node of the Sensor node. In contrast, the TimeSensor node 318 outputs an elapsed time as a fraction_changed event for a period of one second from the startTime.

The fraction_changed event representing the elapsed time, which is output from the TimeSensor node 318, propagates via a ROUTE 324 to a set_fraction field of a ColorInterpolator node 319 to which an identifier 6 is assigned. The ColorInterpolator node 319 has a function of linear-interpolation of levels in an RGB-color space. The value of the set_fraction field is input to a key field and a keyValue field in the ColorInterpolator node 319. When the value of the set_fraction field is 0, the key field and the keyValue field output RGB levels [000] as an event indicating value_changed. When the value of the set_fraction field is 1, the key field and the keyValue field output RGB levels [111] as an event indicating value_changed. When the value of the set_fraction field ranges between 0 and 1, the key field and the keyValue field output a linear-interpolated value between the RGB levels [000] and [111] as an event indicating value_changed. In other words, when the value of the set_fraction field is 0.2, the key field and the keyValue field output RGB levels [0.2 0.2 0.2] as an event indicating value_changed.

The value_changed, which is the result of the linear interpolation, propagates via a ROUTE 325 to a diffuseColor field in a Material node 314 to which an identifier 4 is assigned. The diffuseColor indicates a diffusion color of a surface of the object represented by the Shape node 311 to which the Material node 314 belongs. Through the event propagation via the foregoing ROUTE 323, ROUTE 324, and ROUTE 325, a user interaction occurs in which RGB levels of a displayed cube change from [000] to [111] for a period of one second immediately after a displayed sphere is selected by the user. The user interaction is represented by the ROUTE 323, ROUTE 324, ROUTE 325, and nodes concerning the event propagation shown in thick-line frames in Fig. 12. Hereinafter, data in the scene description required for the user interaction is referred to as data required for event propagation. Nodes other than those in the thick-line frames are not related with events.

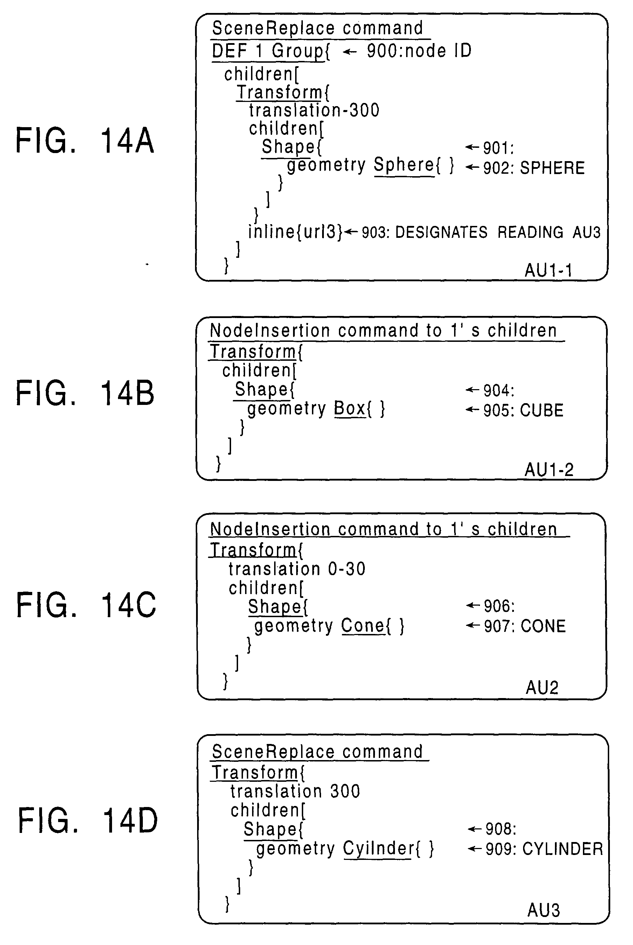

Referring to Figs. 14A to 14D, 15A to 15C, and Fig. 16, the structure of data in MPEG-4 BIFS will now be described. In MPEG-4 BIFS, a scene description can be divided and encoded. Figs. 14A to 14D show an example of a scene description which is divided into four sections. Although scene description data in MPEG-4 BIFS is binary-coded, Figs. 14A to 14D show the data using text, as in VRML, in order to simplify the description. Each of the divided pieces is referred to as an access unit (hereinafter referred to as an "AU"). Fig. 14A shows AU1-1 which is a SceneReplace command including a scene description having a Shape node 901 representing a sphere and an inline node 903 for reading in AU3. A SceneReplace command is a command indicating the start of a new scene description.

Fig. 14B shows AU1-2 which is a NodeInsertion command including a Shape node 904 representing a cube. A NodeInsertion command is a command for inserting a new node into a Children field in a designated node in an existing scene description. A node can be designated using a node ID which is an identifier of a node. Referring again to Fig. 14A, a Group node 900 in AU1-1 indicates that a node ID = 1 is assigned thereto. Thus, the NodeInsertion command in AU1-2 is a command for inserting a node into a Children field of the Group node 900 in AU1-1.

Fig. 14C shows AU2 which is a NodeInsertion command including a Shape node 906 representing a cone.

Fig. 14D shows AU3 which is a SceneReplace command including a Shape node 908 representing a cylinder. It is possible to encode only AU3. In contrast, AU3 can be referred to by the inline node 903 in AU1-1, thus being part of the scene description in AU1-1.

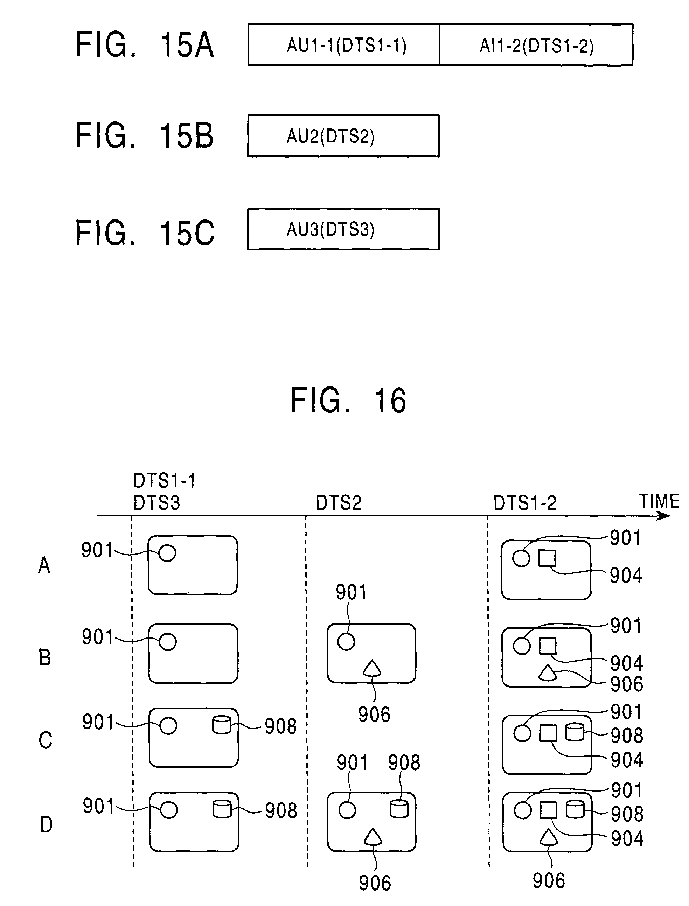

Figs. 15A to 15C show a bit stream structure in MPEG-4 BIFS. For each AU, a Decoding Time Stamp (hereinafter referred to as "DTS") is specified, indicating a time at which each AU should be decoded and hence when the command should become effective. Referring to Fig. 15A, AU1-1 and AU1-2 are included in BIFS data 1. Referring to Fig. 15B, AU2 is included in BIFS data 2. Referring to Fig. 15C, AU3 is included in BIFS data 3. Accordingly, the AU data in MPEG-4 BIFS can be divided into bit streams having a plurality of layers and encoded.

Fig. 16 shows the displayed results of encoding the BIFS data shown in Figs. 15A to 15C. When only the BIFS data 1 is to be decoded, as indicated by A in Fig. 16, AU1-1 is decoded at time DTS1-1. As a result, the sphere represented by the Shape node 901 is displayed. Although the inline node 903 specifies that the BIFS data 3 is to be read, the specification is ignored when the BIFS data 3 cannot be decoded. At time DTS1-2, the NodeInsertion command in AU1-2 is decoded. As a result, the cube represented by the Shape node 904 is inserted. In this way, it is possible to decode and display only bit streams in elementary layers.

When both the BIFS data 1 and the BIFS data 2 are to be decoded, as indicated by B in Fig. 16, the NodeInsertion command in AU2 is decoded at time DTS2. As a result, the cone represented by the Shape node 906 is inserted.

When both the BIFS data 1 and the BIFS data 3 are to be decoded, as indicated by C in Fig. 16, AU3 is read at time DTS3 by the inline node 903 in AU1-1, thereby displaying the cylinder represented by the Shape node 908. When all the BIFS data 1 to 3 are to be decoded, as indicated by D in Fig. 16, the sphere is displayed at time DTS1-1, the cylinder is added at time DTS3, the cone is added at time DTS2, and the cube is added at DTS1-2.

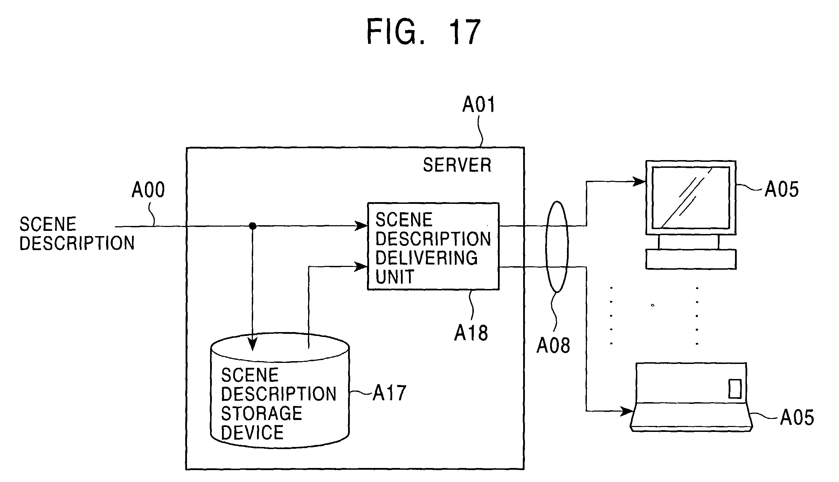

Fig. 17 shows an example of a system for viewing a scene description in content written using a scene description method capable of containing interaction by user input, such as digital television broadcasting, a DVD, homepages on the Internet written in HTML, MPEG-4 BIFS, or VRML.

A server A01 delivers an input scene description A00 or a scene description read from a scene description storage device A17 to external decoding terminals A05 through a transmission medium/recording medium A08 using a scene description delivering unit A18. The server A01 includes an Internet server, a home server, a PC, or the like. The decoding terminals A05 receive and display the scene description A00. On this occasion, the decoding terminals A05 may not have sufficient decoding capability and display capability with respect to the input scene description A00. In addition, the transmission capacity of the transmission medium and the recording capacity and the recording rate of the recording medium may not be sufficient to deliver the scene description A00.

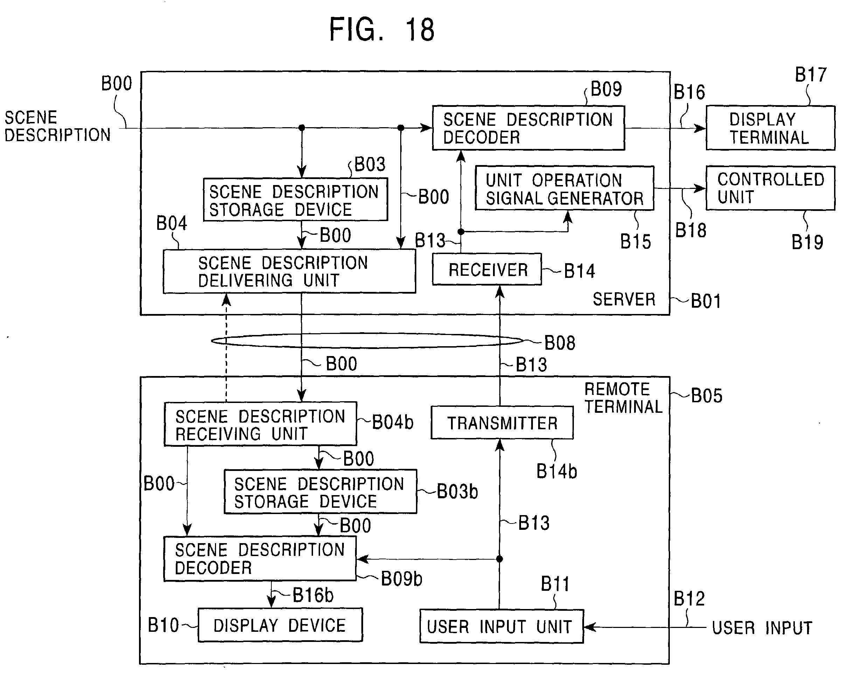

Fig. 18 shows a system for viewing a scene description in content written by a scene description method capable of containing interaction by user input, in which a decoding terminal is a remote terminal having a function of accepting user interaction.

When a server B01 includes a scene description decoder B09, the scene description decoder B09 decodes an input scene description B00, and a decoded scene B16 is displayed on a display terminal B17. At the same time, the server B01 transmits the scene description B00 to a remote terminal B05 through a scene description delivering unit B04. The scene description B00 may be temporarily stored in a scene description storage device B03. The remote terminal B05 is not only a decoding terminal, but also has a function of accepting a user input B12 and transmitting the user input B12 to the server B01. The remote terminal B05 receives the scene description B00 using a scene description receiving unit B04b, decodes the scene description B00 using a scene description decoder B09b, and displays the result on a display device B10. The scene description B00 may be temporarily stored in a scene description storage device B03b. The remote terminal B05 accepts the user input B12 at a user input unit B11 and transmits the user input B12 as user input information B13, which indicates a position selected by the user or the like, to the scene description decoder B09b. The scene description decoder B09b decodes the scene description B00 based on the user input information B13, whereby the decoded result in which the user input B12 has been reflected is displayed on the display device B10. At the same time, the remote terminal B05 transmits the user input information B13 to the server B01 through a transmitter B14b. When the server B01 includes the scene description decoder B09, the scene description decoder B09 in the server B01 also decodes the scene description B00 based on the user input information B13, whereby the decoded scene B16 in which the user input B12 has been reflected is displayed on the display terminal B17. Alternatively, the server B01 may not have the scene description decoder B09, and hence the scene description B00 and the user input information B13 may be delivered to an external decoding terminal.

The user interface system shown in Fig. 18 is used as a remote control system for controlling a controlled unit. The scene description B00 describes a menu for controlling a unit. The user input information B13 is converted into a unit control signal B18 by a unit operation signal generator B15, and the unit control signal B18 is transmitted to a controlled unit B19. The controlled unit B19 may be the server B01. When the scene description B00 includes correspondence between the user input and unit control information, the user input information B13 may be converted to the unit control information by the scene description decoder B09, which in turn is transmitted to the unit operation signal generator B15. When the remote terminal B05 includes the unit operation signal generator B15, the remote terminal B05 may transmit the unit control signal B18 to the controlled unit B19.

When a server delivers a scene description in content written by a scene description method capable of containing interaction by user input, such as digital television broadcasting, a DVD, homepages on the Internet written in HTML, MPEG-4 BIFS, or VRML, and when a decoding terminal has a poor decoding capability and a poor display capability, the scene description may not be properly decoded. When a transmission medium for transmitting a scene description has a small transmission capacity, or when a recording medium for recording a scene description has a small recording capacity and a slow recording rate, the scene description may not be properly delivered.

To this end, when delivering a scene description to decoding terminals having different decoding capabilities and display capabilities, the scene description is adjusted to the decoding terminal, the transmission medium, and the recording medium having the lowest performance. Although there is a demand for appropriately selecting and using a scene description in accordance with the performance of each decoding terminal, such a demand cannot be satisfied in the conventional art in which the performance of each decoding terminal is predicted and then a scene description is encoded. When the performance of a decoding terminal dynamically changes, or when the transmission capacity of a transmission medium or the recording capacity/recording rate of a recording medium for use in delivering a scene description dynamically changes, it is impossible to deal with such changes.

When a decoding terminal is a remote terminal having a function of accepting user interaction, and when the remote terminal is used as a remote controller for controlling a unit, it is necessary to create a scene description describing a unit-controlling menu to be displayed on the remote terminal depending on the decoding capability and the display capability of the remote terminal. Under such circumstances, even when an expanded remote terminal having enhanced decoding capability and display capability becomes available, it is necessary to use a scene description describing a unit-controlling menu adjusted to a less efficient remote terminal in order to ensure backward compatibility with the less-efficient remote terminal having poorer decoding capability and display capability.

### SUMMARY OF THE INVENTION

Accordingly, it is an object of the present invention to provide a scene description generating apparatus and method, a scene description converting apparatus and method, a scene description storing apparatus and method, a scene description decoding apparatus and method, a user interface system, a recording medium, and a storage medium, which can be applied to cases in which the performance of a decoding terminal is poor, the transmission capacity of the transmission medium is small, the recording capacity and the receding rate of the recording medium are low, the performance of the decoding terminal dynamically changes, the transmission capacity of the transmission medium or the recording capacity/recording rate of the recording medium dynamically changes, or it is necessary to ensure backward compatibility with the a remote terminal having poorer decoding/display capabilities.

According to an aspect of the present invention, a scene description generating apparatus for generating scene description information is provided including an encoder for encoding a scene description scenario into the scene description information. An output unit outputs the encoded scene description information. The encoder performs the encoding to include an identifier that indicates a division unit for dividing the scene description information.

According to the present invention, scene description information is converted into scene description data having a plurality of layers. When delivering the scene description information, the scene description data up to an appropriate layer in accordance with decoding/display capabilities. It is therefore possible to properly decode and display the scene description information.

In accordance with the transmission capacity of a transmission medium for use in delivery, the scene description data up to an appropriate layer is delivered. It is therefore possible to properly transmit the scene description.

Since the scene description information is layered, it is possible to appropriately convert the scene description information even when the performance of a decoding terminal dynamically changes or when the transmission capacity of the transmission medium used to deliver the scene description information dynamically changes.

If the decoding capability and the transmission capacity are unknown, since the scene description information is converted into scene description information having a plurality of layers, it is possible to deliver the scene description information in at least one transmittable layer and to decode/display the scene description information in at least one decodable/displayable layer. Hence, it is possible to deliver the scene description information in accordance with the decoding and display capabilities.

Even when an expanded remote terminal having enhanced decoding and display capabilities becomes available, it is possible to ensure backward compatibility with a less efficient remote terminal having poorer decoding and display capabilities, since it is possible to convert scene description information into scene description data having a plurality of layers including a layer suitable for the less efficient decoding terminal and a layer suitable for the enhanced remote terminal.

Since information which may give a hint as to layering is given based on the assumption that scene description is to be layered, the layering is simplified, and priority levels of the layering are designated.

### BRIEF DESCRIPTION OF THE DRAWINGS

Fig. 1 is a block diagram of a scene description delivery viewing system according to a first embodiment of the present invention;
Fig. 2 is flowchart showing a process performed by a scene description converter;
Fig. 3 illustrates division candidates in a scene description in MPEG-4 BIFS;
Figs. 4A to 4C illustrate the results of converting the scene description in MPEG-4 BIFS;
Figs. 5A to 5D illustrate different conversion candidates in the scene description in MPEG-4 BIFS;
Fig. 6 is a block diagram of a scene description delivery viewing system according to a second embodiment of the present invention;
Fig. 7 is a block diagram of a user interface system according to a third embodiment of the present invention, which includes a remote terminal having a function of accepting user interaction and a server;
Fig. 8 is a block diagram of a scene description generator according to a fourth embodiment of the present invention;
Fig. 9 illustrates an example of a scene description output by the scene description generator of the fourth embodiment;
Fig. 10 is a table showing an example of hierarchical information for the scene description generator of the fourth embodiment;
Fig. 11 illustrates the contents of a scene description in VRML or MPEG-4 BIFS;
Fig. 12 illustrates the structure of the scene description in VRML or MPEG-4 BIFS;
Fig. 13 illustrates the displayed result of decoding the scene description in VRML or MPEG-4 BIFS;
Figs. 14A to 14D illustrate the contents of a scene description in MPEG-4 BIFS;
Figs. 15A to 15C illustrate a bit stream structure in MPEG-4 BIFS;
Fig. 16 illustrates the displayed results of decoding the scene description in MPEG-4 BIFS;
Fig. 17 is a block diagram of an example of a system for viewing a scene description; and
Fig. 18 is a block diagram of the structure of a remote terminal having a function of accepting user interaction and the structure of a server.

### DESCRIPTION OF THE PREFERRED EMBODIMENTS

The present invention will be understood from the following description of the preferred embodiments with reference to the accompanying drawings.

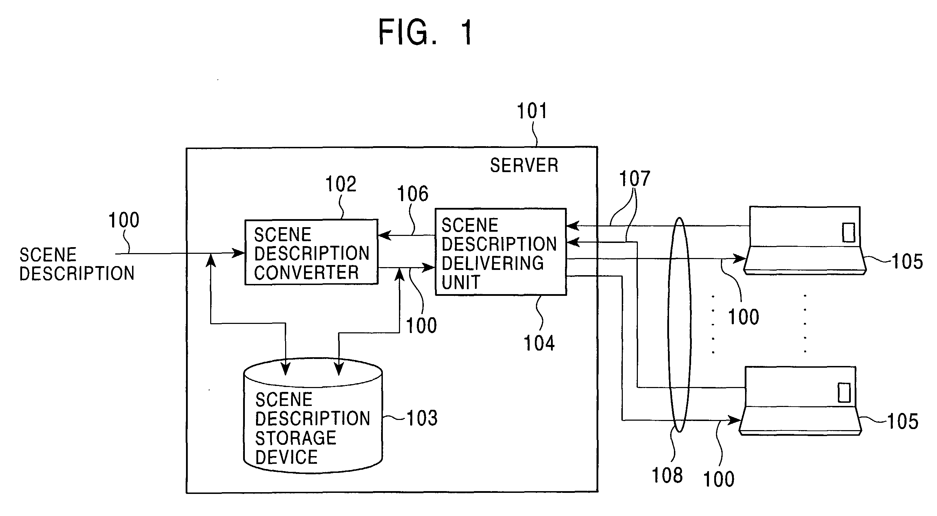

Fig. 1 shows a scene description delivery viewing system according to a first embodiment of the present invention.

The scene description delivery viewing system includes a server 101 for converting a scene description 100 which is input thereto and for delivering the scene description 100 and decoding terminals 105 for receiving delivery of the scene description 100 from the server 101 through a transmission medium/recording medium 108 and transmitting decoding terminal information 107 to the server 101 through the transmission medium/recording medium 108.

The server 101 includes a scene description converter 102 for converting the input scene description 100 or the scene description 100 transmitted from a scene description storage device 103 based on hierarchical information 106. The scene description storage device 103 stores the input scene description 100. A scene description delivering unit 104 delivers the scene description 100 from the scene description converter 102 or from the scene description storage device 103 to the decoding terminals 105 through the transmission medium/recording medium 108. The scene description delivering unit 104 also transmits the hierarchical information 106 to the scene description converter 102 in response to reception of the decoding terminal information 107 transmitted from the decoding terminals 105 through the transmission medium/recording medium 108.

The scene description delivery viewing system is characterized in that the server 101 for delivering a scene description includes the scene description converter 102. When delivering the scene description 100, the server 101 obtains the decoding terminal information 107 indicating the decoding capability and the display capability of each of the decoding terminals 105.

The decoding terminal information 107 includes information on a picture frame displayed when the decoding terminal 105 displays the scene description 100, the upper limit of the number of nodes, the upper limit of the number of polygons, and the upper limit of included media data such as audio and video data, all of which indicate the decoding capability and the display capability of the decoding terminal 105. In addition to the decoding terminal information 107, information indicating the transmission capacity, recording rate, and recording capacity of the transmission medium/recording medium 108 for use in delivering the scene description 100 is added to the hierarchical information 106, which in turn is input to the scene description converter 102.

The scene description converter 102 converts the input scene description 100 based on the hierarchical information 106 into the scene description 100 data having a hierarchical structure. The input scene description 100 and the converted hierarchical scene description 100 may be stored in the scene description storage device 103.

Since the scene description 100 is converted based on the hierarchical information 106, the scene description delivering unit 104 can deliver the scene description 100 data suitable for the transmission medium/recording medium 108 for use in delivery. Furthermore, the scene description delivering unit 104 can deliver the scene description 100 in accordance with the performance of the decoding terminal 105.

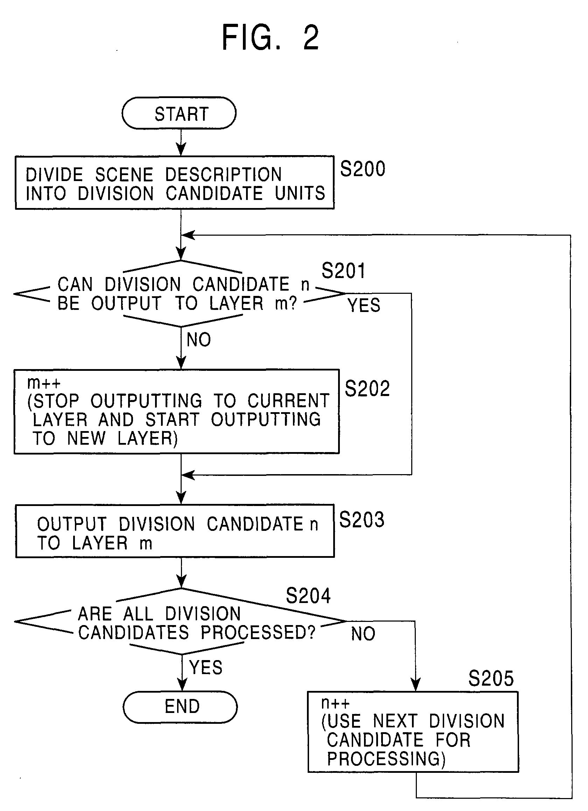

Fig. 2 shows a process performed by the scene description converter 102.

In step S200, the process divides the scene description 100 into division candidate units. In Fig. 2, a number assigned to each division candidate is represented by n. The scene description converter 102 converts the input scene description 100 into the scene description 100 data having a plurality of layers. A layer of the scene description 100 data to be output is represented by m, the number m representing a layer starting from zero. The smaller the number m, the more elementary the layer.

In step S201, the process determines whether a division candidate n can be output to a current layer based on the hierarchical information 106. For example, if the number of bytes of data permitted for the current layer is limited by the hierarchical information 106, the process determines whether the scene description to be output to the current layer is not greater in bytes than the number of bytes limited as above even when the division candidate n is added. If the process determines that the division candidate n cannot be output to the current layer, the process proceeds to step S202. If the process determines that the division candidate n can be output to the current layer, the process skips step S202 and proceeds to step S203.

In step S202, the process increments the number m of the layer by one. In other words, the output to the current layer m is terminated, and the process starts outputting to the scene description 100 data in a new layer from this point onward. Subsequently, the process proceeds to step S203.

In step S203, the process outputs the division candidate n to the current layer m and proceeds to step S204.

When the process determines in step S204 that all division candidates have been processed, the conversion process is terminated. If any unprocessed division candidates remain, the process proceeds to step S205.

In step S205, the process increments the number n of the division candidate by one. In other words, the subsequent division candidate is to be used for processing. The process is repeated from step S201 onward.

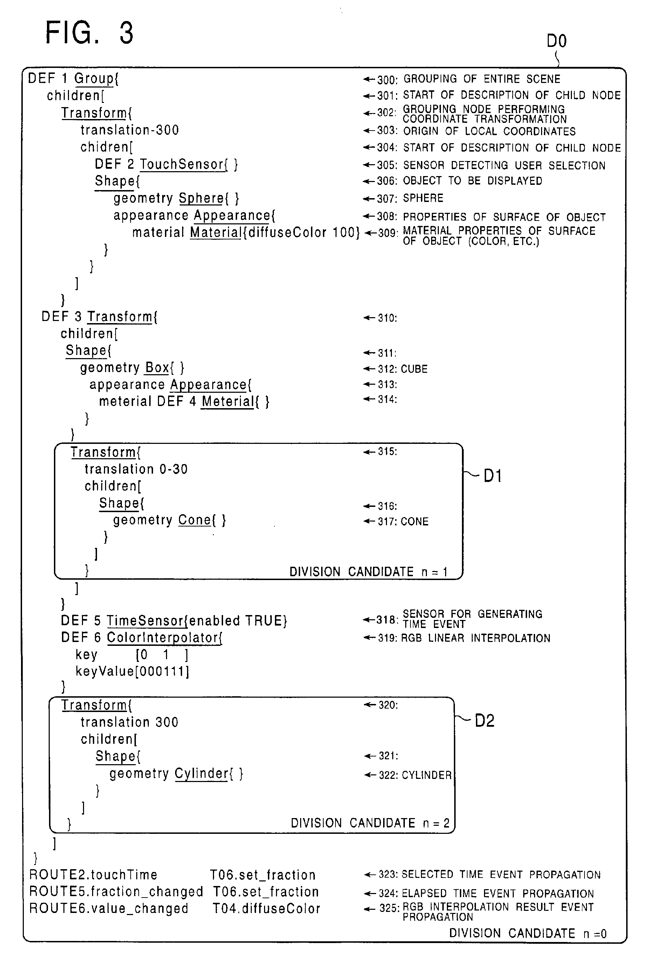

Referring to Fig. 3, the scene description converting process shown in Fig. 2 is described using MPEG-4 BIFS by way of example. To simplify the description, the scene description 100 to be input to the scene description converter 102 is the same as that shown in Fig. 11.

By performing the processing in step S200 shown in Fig. 2, the scene description 100 is divided into division candidate units. In order to use a NodeInsertion command which is known in the conventional art, a Children field in a grouping node is used as a division unit. If data required for event propagation for user interaction will not be divided, there are three division candidates D0, D1, and D2 shown in Fig. 3.

A division candidate including a Group node 300 which is the top node in the input scene description 100 is used as division candidate DO in which n = 0. Nodes below a Transform node 315 are used in division candidate D1 in which n = 1. Since a Shape node 316 in division candidate D1 in which n = 1 is in a Children field in the Transform node 315 which is a grouping node, the Shape node 316 may be used as a separate division candidate.

In this example, the Shape node 316 is not used as a separate division candidate since the Transform node 315 has no Children field other than the Shape node 316. Nodes below a Transform node 320 are used in division candidate D2 in which n = 2. Similarly, nodes below a Shape node 321 may be in a different division candidate.

Division candidate D0 in which n = 0 is always output to the layer m = 0. The processing performed in step S201 shown in Fig. 2 determines whether division candidate D1 in which n = 1 can be output to the layer m = 0 based on the hierarchical information 106.

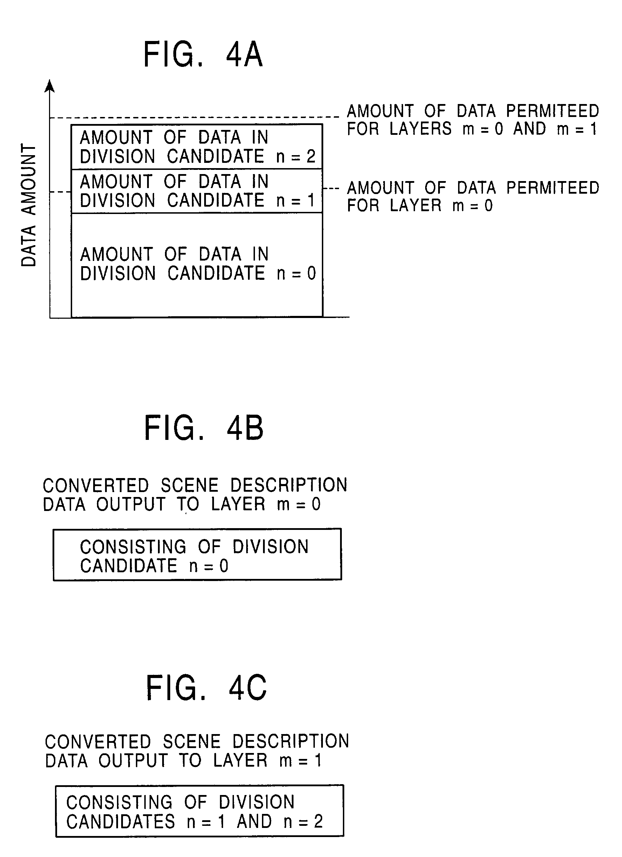

Figs. 4A to 4C show examples of determination when the amount of data permitted for each layer in the scene description 100 data to be output is specified. Referring to Fig. 4A, when division candidate D1 in which n = 1 is output to the layer m = 0, the amount of data permitted for the layer m = 0 is exceeded. It is therefore determined that division candidate D1 in which n = 1 cannot be output to the layer m = 0.

The processing performed in step S202 shown in Fig. 2 determines that the output to the layer m = 0, which is shown in Fig. 4B, includes only division candidate D0 in which n = 0. From this point onward, output to the layer m = 1 is performed. The processing in step S203 outputs division candidate D1 in which n = 1 to the layer m = 1.

Similar processing is performed for division candidate D2 in which n = 2. As shown in Fig. 4A, even when division candidate D2 in which n = 2 is output to the layer m = 1, the sum of the amount of data permitted for the layer m = 0 and the amount of data permitted for the layer m = 1 is not exceeded. It is thus determined that division candidate D2 in which n = 2 is output to the same layer m = 1 as division candidate Dl in which n = 1, as shown in Fig. 4C.

Accordingly, the scene description converter 102 converts the input scene description 100 into the scene description 100 data consisting of two layers, one of which is the converted scene description data output to the layer m = 0, which is shown in Fig. 4B, and the other is the converted scene description data output to the layer m = 1, which is shown in Fig. 4C.

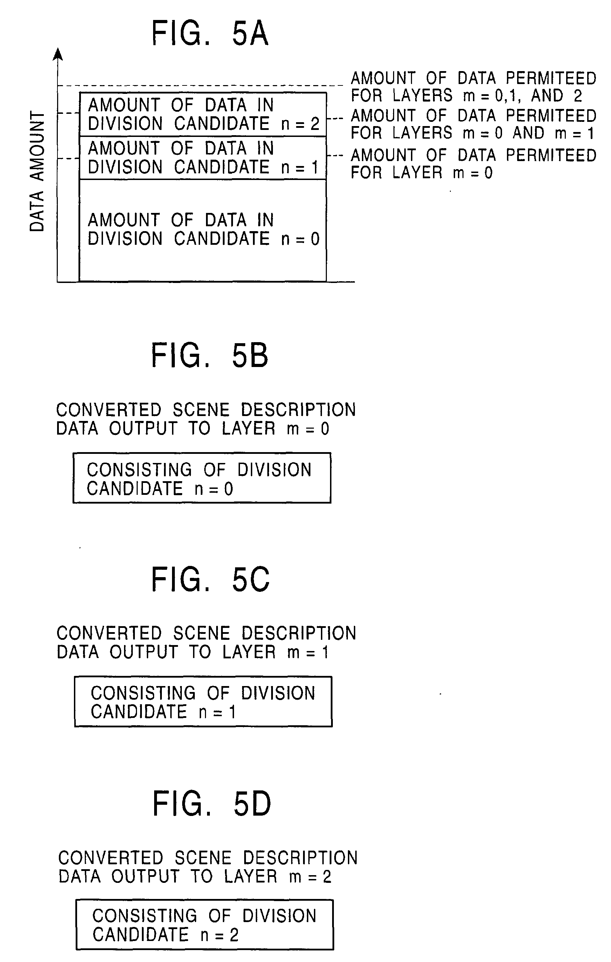

A modification shown in Fig. 5A is obtained by converting the same input scene description 100 as that shown in Fig. 4A based on different hierarchical information 106, thus achieving scene description 100 data output consisting of three layers.

In other words, the scene description 100 shown in Fig. 5A is converted into, similarly to those shown in Figs. 4A to 4C, converted scene description data output to layer m = 0 shown in Fig. 5B, converted scene description data output to layer m = 1 shown in Fig. 5C, and converted data output to layer m = 2 shown in Fig. 5D.

In this case, when the transmission capacity, recording capacity, and recording rate of the transmission medium/recording medium 108 for use in delivering the scene description 100 are poor and are only sufficient to deliver the amount of data permitted for layer m = 0, the scene description delivering unit 104 delivers only the scene description 100 in layer m = 0 shown in Fig. 5B.

Even when only the scene description 100 in layer m = 0 is delivered, the same user interaction as that before the conversion can be achieved at the encoding terminal 105 since data required for event propagation is not divided.

When the transmission medium/recording medium 108 has a capacity sufficient for the sum of the amount of data in layers m = 0 and m = 1, the scene description delivering unit 104 delivers the scene description 100 data in two layers, i.e., m = 0 shown in Fig. 5B and in m = 1 shown in Fig. 5C.

Since the scene description 100 data in layer m = 1 is inserted into the scene description 100 in layer m = 0 using a NodeInsertion command, the decoding terminal 105 can decode the scene description 100 to display the same scene description 100 as that before the conversion.

Since the scene description converter 102 converts the scene description 100 based on the time-varying hierarchical information 106, it is possible to deal with cases in which the transmission capacity, recording capacity, and recording rate of the transmission medium/recording medium 108 dynamically change. The similar advantages can be achieved when the converted scene description 100 data is recorded in the transmission medium/recording medium 108.

Referring to Figs. 5A to 5D showing the conversion results, when the decoding and display capabilities of the decoding terminal 105 for receiving, decoding, and displaying the scene description 100 are poor and are only sufficient to decode/display the amount of data permitted for layer m = 0, the scene description delivering unit 104 delivers only the scene description 100 in layer m = 0 shown in Fig. 5B to the decoding terminal 105.

Even when only the scene description 100 in layer m = 0 is delivered, the same user interaction as that before the conversion can be achieved at the encoding terminal 105 since data required for event propagation is not divided.

When the decoding terminal 105 has decoding and display capabilities sufficient for the sum of the amount of data in layers m = 0 and m = 1, the scene description delivering unit 104 delivers the scene description 100 data in two layers, i.e., m = 0 shown in Fig. 5B and in m = 1 shown in Fig. 5C, to the decoding terminal 105.

Since the scene description 100 data in layer m = 1 is inserted into the scene description 100 in layer m = 0 using a NodeInsertion command, the decoding terminal 105 can decode the scene description 100 to display the same scene description 100 as that before the conversion.

Since the scene description converter 102 converts the scene description 100 based on the time-varying encoding terminal information 107, it is possible to deal with cases in which the decoding capability and the display capability of the decoding terminal 105 dynamically change or in which a new decoding terminal 105 having a new performance is used as a delivery destination.

In MPEG-4 BIFS, commands for inserting nodes, which are shown in Figs. 14A to 14D, may be used to layer the scene description 100. It is also possible to use Inline nodes or EXTERNPROTO described in Chapter 4.9 of ISO/IEC14772-1.

EXTERNPROTO is a method for referring to a node defined by a node defining method, namely, PROTO, in external scene description data.

DEF/USE described in Chapter 4.6.2 of ISO/IEC14772-1 is such that DEF names a node and USE refers to the node defined by DEF from other locations in the scene description 100.

In MPEG-4 BIFS, a numerical identifier referred to as a "node ID" is given to a node as in DEF. By specifying the node ID from other locations in the scene description 100, the node ID can be used in a manner similar to the reference made by USE in VRML.

When layering the scene description 100, and when a portion in which DEF/USE described in Chapter 4.6.2 of ISO/IEC14772-1 are used is not divided into different division candidates, the scene description 100 can be converted without destroying the reference relationship from USE to the node defined by DEF.

Although the examples shown in Figs. 4A to 5D use the amount of data permitted for each layer as the hierarchical information 106, the hierarchical information 106 can also be information used to determine whether a division candidate in the scene description 100 can be included in the scene description 100 data in a particular layer. For example, the hierarchical information 106 includes the upper limit of the number of nodes included in a layer, the number of pieces of polygon data in computer graphics included in a layer, restrictions on media data such as audio data and video data included in a layer, or a combination of these types.

The scene description converter 102 converts the input scene description 100 into the hierarchically-structured scene description 100 data. When the scene description 100 is to be stored in the scene description storage device 103, the hierarchical structure of the scene description 100 can be utilized in saving the storage capacity of the scene description storage device 103.

In the conventional art, when deleting the scene description 100 data from the scene description storage device 103, there is no other choice than to delete the entire scene description 100 data. In this way, information of the content recorded by the scene description 100 is entirely lost.

With the scene description converter 102, the scene description 100 is converted into the scene description 100 data consisting of a plurality of layers. When deleting the scene description 100 data, the scene description 100 data is deleted until the necessary amount of data is deleted. In doing so, part of the information of the content described by the scene description 100 can be saved.

The first embodiment is independent of the type of scene description method and is applicable to various scene description methods in which scenes are divisible.

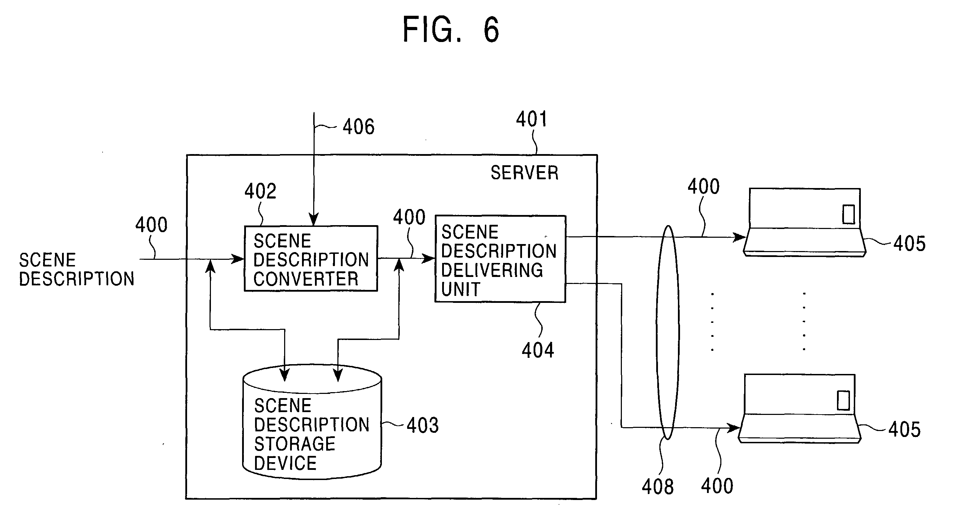

Referring to Fig. 6, a scene description delivery viewing system according to a second embodiment of the present invention is described.

The scene description delivery viewing system includes a server 401 for converting input scene description information, i.e., a scene description 400, and for delivering the scene description 400, and decoding terminals 405 for receiving delivery of the scene description 400 from the server 401 through a transmission medium/recording medium 408.

The server 401 includes a scene description converter 402 for converting the input scene description 400 or the scene description 400 transmitted from a scene description storage device 403 based on input hierarchical information 406. The scene description storage device 403 stores the input scene description 400. A scene description delivering unit 404 delivers the scene description 400 from the scene description converter 402 or from the scene description storage device 403 through the transmission medium/recording medium 408 to the decoding terminals 405.

The scene description delivery viewing system of the second embodiment differs from that of the first embodiment shown in Fig. 1 in that the scene description converter 402 does not use information on the decoding terminals 405 or on the transmission medium/recording medium 408 when layering the scene description 400.

The scene description converter 402 of the second embodiment converts the input scene description 400 into scene description 400 data having a hierarchical structure based on predetermined hierarchical information 406, without using information on the decoding terminals 405 and on the transmission medium/recording medium 408.

The hierarchical information 406 includes the upper limit of the amount of data permitted for the scene description 400 in each layer and the upper limit of the number of nodes. Although the hierarchical information 406 of the second embodiment is similar to that in the first embodiment in which the values are determined based on the hierarchical information in the first embodiment, the hierarchical information 406 uses predetermined values.

The scene description delivering unit 404 delivers the scene description 400 data up to a layer suitable for the transmission capacity, recording capacity, and recording rate of the transmission medium/recording medium 408.

If decoding terminal information can be obtained as in the first embodiment, the scene description 400 data up to a layer suitable for the decoding capacity and the display capacity of the decoding terminals 405 is delivered. If no decoding terminal information is provided, the scene description 400 data in all transmittable/recordable layers are transmitted or recorded.

Among the received scene description 400 data in a plurality of layers, the decoding terminals 405 decode and display the scene description 400 data up to a layer in which decoding and displaying can be performed.

Even when the performance of the decoding terminals 405 and the transmission capacity, recording capacity, and recording rate of the transmission medium/recording medium 408 are unknown, the scene description 400 is converted by the scene description converter 402 into the scene description 400 having a plurality of layers. Consequently, it is possible to deliver the scene description 400 data in a transmittable layer or layers at the time of delivery, and the decoding terminals 405 receive and display the scene description 400 data in a decodable and displayable layer or layers. It is therefore possible to perform delivery suitable for the decoding terminals 405 and the transmission medium/recording medium 408.

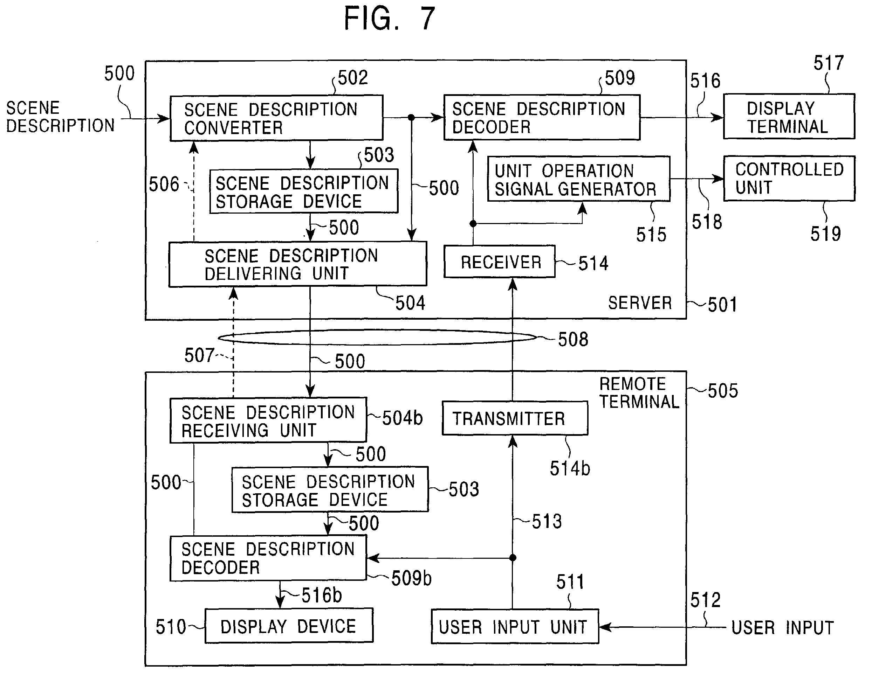

Referring to Fig. 7, a user interface system having a function of accepting user interaction according to a third embodiment of the present invention is described.

The user interface system includes a server 501 for converting input scene description information, i.e., a scene description 500. A remote terminal 505 displays the scene description 500 transmitted from the server 501 and accepts user input 512 in accordance with the display. A display terminal 517 displays a decoded scene 516 transmitted from the server 501. A controlled unit 519 is controlled by a unit control signal 518 transmitted from the server 501.

The server 501 includes a scene description converter 502 for converting the input scene description 500 in accordance with hierarchical information 506. A scene description storage device 503 stores the scene description 500 from the scene description converter 502. A scene description decoder 509 decodes the scene description 500 from the scene description converter 502 based on user input information 513. A unit operation signal generator 515 generates the unit control signal 518 based on the user input information 513.

Furthermore, the server 501 includes a scene description delivering unit 504 for delivering the scene description 500 from the scene description converter 502 or from the scene description storage device 403 to the remote terminal 505 through the transmission medium/recording medium 508, for receiving decoding terminal information 507 transmitted from the remote terminal 505 through the transmission medium/recording medium 508, and for transmitting the decoding terminal information 507 to the scene description converter 502. A receiver 514 receives the user input information 513 transmitted from the remote terminal 505 through the transmission medium/recording medium 508 and transmits the user input information 513 to the scene description converter 509 and to the unit operation signal generator 515.

According to the third embodiment, as shown in Fig. 18, in the case in which the remote terminal 505 is a decoding terminal having a function of accepting user interaction when viewing the scene description 500 described by a scene description method capable of containing interaction based on the user input 512, the server 501 includes the scene description converter 502.

The user interface system shown in Fig. 18 or Fig. 7 can be used as a remote control system for controlling the controlled unit 519.

The scene description 500 describes a menu for controlling a unit. The user input information 513 is converted into the unit control signal 518 by the unit operation signal generator 515 and is sent to the controlled unit 519.

Concerning the remote terminal B05 and the server B01 shown in Fig. 18, the scene description B00 describing a unit-controlling menu to be displayed on the remote terminal B05 must be created depending on the decoding capability and the display capability of the remote terminal B05.

Even when the remote terminal B05 having enhanced decoding and display capabilities becomes available for use, it is necessary to use the scene description B00 describing the unit-controlling menu adjusted to the remote terminal B05 having poorer decoding and display capabilities in order to ensure backward compatibility with the less efficient remote terminal B05.

When simultaneously delivering the scene description B00 to a plurality of remote terminals B05, only the scene description B00 adjusted to the least efficient remote terminal B05 can be used.

The scene description converter 502 included in the server 501 shown in Fig. 7 operates in a manner similar to the scene description converter 102 of the first embodiment and the scene description converter 402 of the second embodiment.

It is therefore possible to deliver the scene description 500 in a suitable layer or layers based on the transmission capacity, recording capacity, and recording rate of the transmission medium/recording medium 508 for use in delivering the scene description 500.

Since the server 501 is provided with the scene description converter 502, the performance of the remote terminal 505 is not required to be known at the point at which the scene description 500 is generated. Even when remote terminals 505 having different performances are simultaneously used or a remote terminal 505 having a different performance is added, the backward compatibility is never lost. It is possible to deliver the scene description 500 suitable for each of the remote terminals 505.

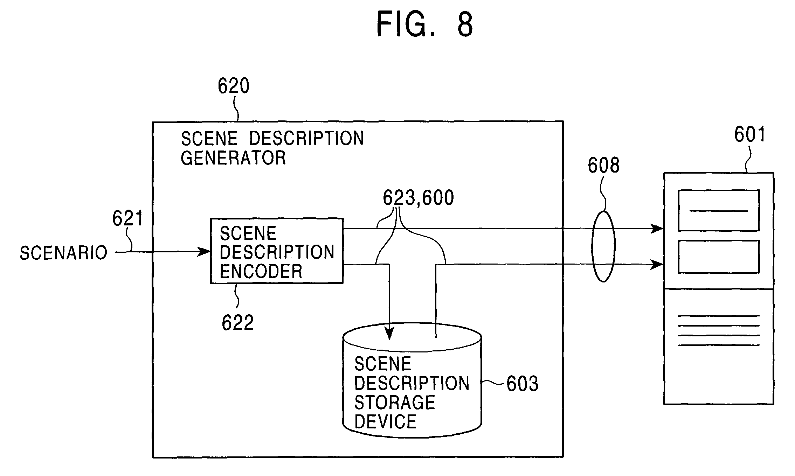

Referring to Fig. 8, a scene description generator for generating a scene description according to a fourth embodiment of the present invention is described.

A scene description generator 620 includes a scene description encoder 622 for encoding an input scenario 621 as scene description information, i.e., a scene description 600, and a scene description storage device 603 for storing the scene description 600 from the scene description encoder 622.

The scene description 600 output from the scene description encoder 622 or the scene description storage device 603 in the scene description generator 620 is transmitted to a server 601 through a transmission medium/recording medium 608.

The scene description generator 620 is provided with the scene description encoder 622 to which the scenario 621 describing details of a scene to be written is input, thereby generating the scene description 600. The scene description 600 may be text data or binary data.

The scene description encoder 622 also outputs hierarchical information 623 which will be described below. The scene description 600 and the hierarchical information 623 may be stored in the scene description storage device 603. The generated scene description 600 and the hierarchical information 623 are input to the server 601 through the transmission medium/recording medium 608.

The server 601 corresponds to the server 101 of the first embodiment shown in Fig. 1, to the server 401 of the second embodiment shown in Fig. 6, and to the server 501 of the third embodiment shown in Fig. 7.

In the server 601 for receiving the scene description 600, when the scene description encoder 622 converts the scene description 600 into scene description 600 data having a hierarchical structure, it is possible to determine in advance division units which are used in the processing performed in step S200 in Fig. 2. In doing so, the division units become distinguishable from one another.

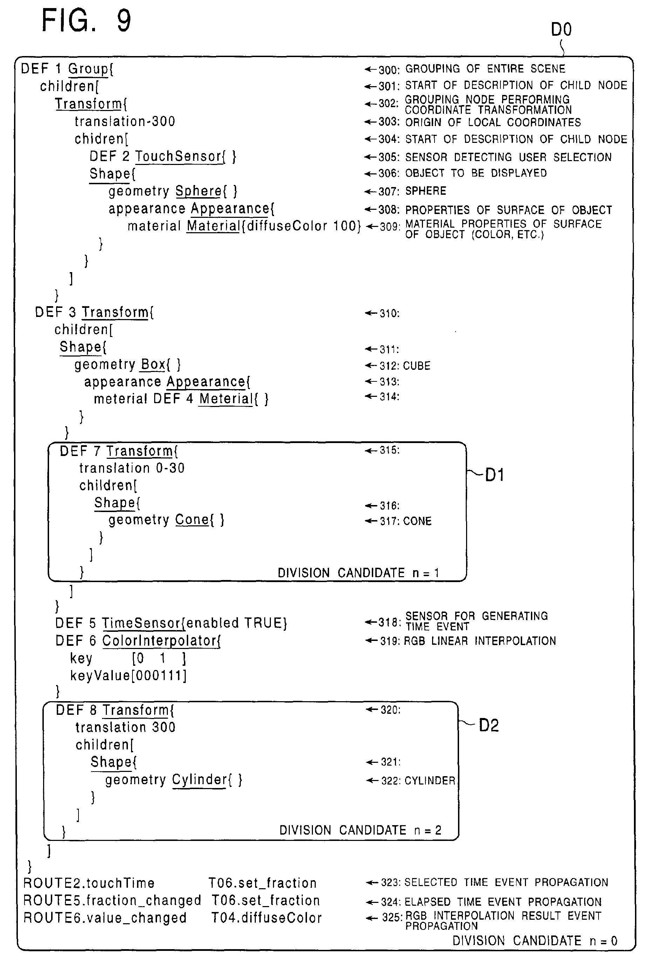

Fig. 9 shows the scene description 600 output by the scene description encoder 622 using VRML by way of example. For the purposes of discussion, the contents of the scene description 600 are the same as those shown in Fig. 3.

When the scene description encoder 622 of the fourth embodiment converts a scene description into scene description data having a hierarchical structure using a scene description converter, the scene description encoder 622 gives an identifier to each division unit, which is obtained in step S200 shown in Fig. 2, at the stage of generating the scene description 600.

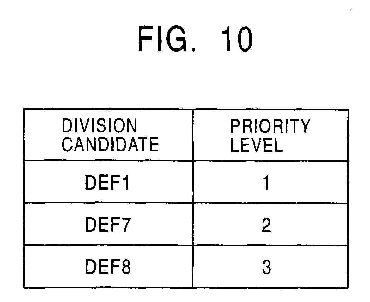

In the example shown in Fig. 9, an identifier that can be added to a node using the DEF keyword is used. At the same time, the scene description encoder 622 outputs an identifier indicating a division candidate and the hierarchical information 623 indicating the priority level when layering the scene description 600, as shown in Fig. 10.

Each of the scene description converters of the first to the third embodiments, to which the scene description 600 shown in Fig. 9 and the hierarchical information 623 shown in Fig. 10 are input, uses a specified portion of the identifier shown by the hierarchical information 623 as a division candidate when dividing a scene description into division candidate units in step S200 shown in Fig. 2.

In the example shown in Fig. 9, the scene description is divided into three division candidates. The three division candidates include a Transform node 315 to which an identifier 7 is given, a Transform node 320 to which an identifier 8 is given, and a Group node 300 to which an identifier 1 is given excluding a portion of the Transform node 315 and a portion of the Transform node 320.

From this point onward, the scene description is converted using processing steps similar to those shown in Fig. 2. When layering the scene description, since the priority level of each division candidate is included in the hierarchical information 623 shown in Fig. 10, division candidate D0 to which an identifier 1 is given is used as a first layer, followed by division candidate D1 to which an identifier 7 is given. As a third layer, division candidate D2 to which an identifier 8 is given is used.

Since the scene description generator 620 encodes in advance the identifiers indicating the division candidates in the scene description 600, the division of the scene description is simplified when converting the scene description. Furthermore, the priority level of a division unit can be specified at the stage of generating the scene description 600.

When a more important portion is designated in the hierarchical information 623 as a division candidate having a higher priority level, it becomes possible to store important contents in a more elementary layer.

By using the identifiers indicating the division candidates, which are determined in advance by the scene description converter, and the representation of the priority levels, which is determined in advance by the scene description converter, it becomes unnecessary to use the hierarchical information 623 to achieve the same advantages.

For example, Fig. 10 shows an example in which the identifiers 1, 7, and 8 show division candidates. Since the priority levels are in ascending order of the identifiers, if the scene description converter is known, the scene description generator 620 is not required to output the hierarchical information 623 to achieve the same advantages.

The scene description generator 620 of the fourth embodiment may be integrated with the server 101 of the first embodiment shown in Fig. 1, with the server 401 of the second embodiment shown in Fig. 6, or with the server 501 of the third embodiment shown in Fig. 7.

As described above, according to the fourth embodiment, when viewing content consisting of scenes including interaction by user input, such as digital television broadcasting, DVD, HTML, MPEG-4, BIFS, and VRML, a scene description is converted into data having a hierarchical structure. Therefore, the scene description data can be transmitted/recorded using transmission media/recording media having different transmission capacities and can be decoded/displayed using terminals having different decoding and display capabilities. An identifier, which may give a hint as to layering, is encoded in a scene description, and hence the priority level of a layer is output. It is therefore possible to easily convert the scene description.

The embodiments of the present invention are independent of the type of scene description method and are applicable to various scene description methods capable of embedding identifiers which discriminate division candidates from one another in a scene description. For example, in MPEG-4 BIFS, a node ID defined by ISO/IEC14496-1 is used as the identifier, thus achieving the foregoing advantages.

The embodiments of the present invention can be implemented by hardware or by software.

## Claims

1. A scene description generating apparatus for generating scene description information, comprising:
encoding means for encoding a scene description scenario into the scene description information; and
output means for outputting the encoded scene description information;
wherein said encoding means performs the encoding to include an identifier that indicates a division unit for dividing the scene description information.

2. A scene description generating apparatus according to Claim 1, wherein said encoding means outputs the identifier.

3. A scene description generating apparatus according to Claim 1, wherein said encoding means outputs a priority level of the division unit for dividing the scene description information.

4. A scene description generating apparatus according to Claim 1, wherein:
the scene description information is specified in the ISO/IEC 14772-1 standard; and
the identifier is a DEF specified in the ISO/IEC 14772-1 standard.

5. A scene description generating apparatus according to Claim 1, wherein:
the scene description information is specified in the ISO/IEC 14496-1 standard; and
the identifier is a node ID specified in the ISO/IEC 14496-1 standard.

6. A scene description generating method for generating scene description information, comprising:
an encoding step of encoding a scene description scenario into the scene description information; and
an output step of outputting the encoded scene description information;
wherein, in said encoding step, the encoding is performed to include an identifier that indicates a division unit for dividing the scene description information.

7. A scene description generating method according to Claim 6, wherein, in said encoding step, a priority level of the division unit for dividing the scene description information is output.

8. A scene description converting apparatus for converting scene description information, comprising:
converting means for converting input scene description information into scene description information having a hierarchical structure; and
output means for outputting the converted scene description information.

9. A scene description converting apparatus according to Claim 8, wherein said converting means outputs, to a single layer, data required for event propagation indicating user interaction.

10. A scene description converting apparatus according to Claim 8, wherein said converting means outputs, to a single layer, data indicating a reference relationship in the scene description information.

11. A scene description converting apparatus according to Claim 8, wherein said converting means converts the scene description information into the scene description information having the hierarchical structure based on the transmission capacity of a transmission medium for delivering the scene description information.

12. A scene description converting apparatus according to Claim 8, wherein said converting means converts the scene description information into the scene description information having the hierarchical structure based on the recording capacity of a recording medium for delivering the scene description information.

13. A scene description converting apparatus according to Claim 8, wherein said converting means converts the scene description information into the scene description information having the hierarchical structure based on the decoding capability of a decoding terminal for decoding the scene description information in response to reception of the scene description information.

14. A scene description converting apparatus according to Claim 8, wherein said converting means converts the scene description information into the scene description information having the hierarchical structure based on the display capability of a display terminal for decoding and displaying the scene description information in response to reception of the scene description information.

15. A scene description converting apparatus according to Claim 8, wherein:
the scene description information is specified in one of the ISO/IEC 14772-1 standard and the ISO/IEC 14496-1 standard; and
said converting means converts the scene description information into the scene description information having the hierarchical structure using a node in a Children field in a Grouping node specified in one of said standards as a division unit.

16. A scene description converting apparatus according to Claim 8, wherein:
the scene description information is encoded to include an identifier that indicates a division unit for dividing the scene description information; and
said converting means converts the scene description information into the scene description information having the hierarchical structure based on the identifier.

17. A scene description converting apparatus according to Claim 8, wherein:
the scene description information is encoded to include an identifier that indicates a division unit for dividing the scene description information; and
said converting means converts the scene description information into the scene description information having the hierarchical structure based on the identifier, the identifier being input separately from the scene description information.

18. A scene description converting apparatus according to Claim 8, wherein:
the scene description information is encoded to include an identifier that indicates a division unit for dividing the scene description information; and
said converting means converts the scene description information into the scene description information having the hierarchical structure based on a priority level of the division unit for dividing the scene description information, the priority level being input separately from the scene description information.

19. A scene description converting apparatus according to Claim 8, wherein:
the scene description information is specified in one of the ISO/IEC 14772-1 standard and the ISO/IEC 14496-1 standard; and
said converting means converts the scene description information into the scene description information having the hierarchical structure using an Inline node specified in one of said standards.

20. A scene description converting apparatus according to Claim 8, wherein:
the scene description information is specified in one of the ISO/IEC 14772-1 standard and the ISO/IEC 14496-1; and
said converting means converts the scene description information into the scene description information having the hierarchical structure using an EXTERNPROTO specified in one of said standards.

21. A scene description converting apparatus according to Claim 8, wherein:
the scene description information is specified in the ISO/IEC 14772-1 standard; and
said converting means converts the scene description information into the scene description information having the hierarchical structure using an Access Unit specified in the ISO/IEC 14772-1 standard.

22. A scene description converting method for converting scene description information, comprising:
a converting step of converting input scene description information into scene description information having a hierarchical structure; and
an output step of outputting the converted scene description information.

23. A scene description converting method according to Claim 22, wherein, in said converting step, data indicating a reference relationship in the scene description information is output to a single layer.

24. A scene description storing apparatus for storing scene description information, comprising:
storing means for storing scene description information having a hierarchical structure; and
deleting means for saving, of the scene description information stored in said storage means, the scene description information in an elementary layer and for deleting only the scene description information in at least one layer until the necessary amount of data is deleted.

25. A scene description storing method for storing scene description information, comprising:
a storing step of storing scene description information having a hierarchical structure; and
a deleting step of saving, of the scene description information stored in said storing step, the scene description information in an elementary layer, and deleting only the scene description information in at least one layer until the necessary amount of data is deleted.

26. A scene description decoding apparatus for decoding scene description information, comprising:
decoding means, to which scene description information having a hierarchical structure is input, for decoding the scene description information in at least one decodable layer; and
display means for displaying the scene description information decoded by said decoding means;
wherein said decoding means decodes a layer displayable on said display means as the decodable layer.

27. A scene description decoding method for decoding scene description information, comprising:
a decoding step, in which scene description information having a hierarchical structure is input, of decoding the scene description information in at least one decodable layer; and
a display step of displaying the scene description information decoded in said decoding step;
wherein, in said decoding step, a layer displayable in said display step is decoded as the decodable layer.

28. A user interface system using scene description information including user interaction, comprising:
a server comprising converting means for converting input scene description information into scene description information having a hierarchical structure and first decoding means for decoding the scene description information; and
a remote terminal comprising second decoding means for decoding the scene description information, display means for displaying a scene, and input means to which user input information is input;
wherein said server transmits the converted scene description to said remote terminal;
said remote terminal decodes the scene description information transmitted from said server in at least one decodable layer using said second decoding means and displays the decoded scene description information on said display means;
said remote terminal transmits the user input information input to said input means to said server in accordance with the display; and
said server decodes the scene description information based on the user input information using said first decoding means.

29. A recording medium having recorded thereon scene description information including user interaction, wherein:
the scene description information is encoded to include an identifier that indicates a division unit for dividing the scene description information; and
the scene description information has a hierarchical structure.
